# EUROPÄISCHE PATENTSCHRIFT

(11) **EP 4 506 582 B1**
(45) Veröffentlichungstag und Bekanntmachung des Hinweises auf die Patenterteilung: **05.11.2025**
(21) Anmeldenummer: 24192689.8
(22) Anmeldetag: 02.08.2024
(51) Int. Cl.: F16D 3/38

(54) **GABELWELLE**
FORK SHAFT
ARBRE DE FOURCHE

(30) Priorität: 04.08.2023 DE 102023120776
(43) Veröffentlichungstag der Anmeldung: 12.02.2025
(73) Patentinhaber: Elbe Holding GmbH & Co. KG, 74321 Bietigheim-Bissingen (DE)
(72) Erfinder: PIKA, Patryk, 74321 Bietigheim-Bissingen (DE); JÄGER, Michael, 74321 Bietigheim-Bissingen (DE); LANGGUTH, Frank, 74321 Bietigheim-Bissingen (DE)
(74) Vertreter: STT Sozietät Thews & Thews

(56) Entgegenhaltungen:
- DE-A1- 102013 212 052
- DE-U1- 8 206 801
- FR-A3- 3 104 256
- US-A1- 2008 078 253
- US-A1- 2021 165 014
- US-A1- 2023 204 079

## Beschreibung

Die Erfindung bezieht sich auf eine Welle mit einer Einrichtung zur mittelbaren Erfassung und Übertragung von Messdaten von der Welle, die aus einer mechanischen Beanspruchung der Welle resultieren, wobei die Welle mit einer Mittelachse als Teil einer Kardanwelle einen ersten Endabschnitt aufweist und die Welle mit einer Gabel zum Übertragen von Drehmomenten auf einen Kreuzzapfen kombiniert ist und die Welle mit der Gabel ein Wellenende bildet. Das Wellenende wird entsprechend durch den Endabschnitt und die Gabel gebildet.

Gattungsgemäße Kardanwellen als eine spezielle Form der Gelenkwellen umfassen ein oder zwei Kreuzgelenke (Kardangelenke) zum Knicken, Abwinkeln oder Beugen des Wellenstrangs sowie zur Weiterleitung und Übertragen eines Drehmoments an beidseitig an das Kreuzgelenk anschließende Wellen. Das Kreuzgelenk umfasst in den bevorzugten Ausführungsformen zwei Gabeln, die über einen Kreuzzapfen mit zwei rechtwinklig gekreuzten Zapfenpaaren miteinander verbunden sind. An die jeweilige Gabel schließt eine Welle an, die über den bezüglich der Gabel gegenüberliegenden zweiten Endabschnitt der Welle das Drehmoment über eine Verzahnung oder einen Flansch auf ein weiteres Bauteil im Antriebsstrang überträgt. In den meisten Anwendungsformen schließt an die Gabel eine Gabelwelle, also eine Welle mit einer Außenverzahnung oder eine Hohlwelle mit einer Innenverzahnung an. Eine Gabelwelle und eine Hohlwelle sind zwecks eines Längenausgleichs zueinander verschiebbar gelagert und bilden zusammen ein Schiebelager oder eine Verschiebung.

Aus der WO 2022/017928 A1 ist bereits ein Kreuzgelenk mit einer anschließenden Hohlwelle bekannt, bei der in dem Hohlraum der Hohlwelle an die Verzahnung anschließend ein Sensor angeordnet ist. Nach der DE 11 2017 000 605 T5 ist eine gattungsgemäße Gabelwelle bekannt, bei der der Sensor auf der Außenseite der Gabelwelle im Bereich der Außenverzahnung unmittelbar vor der Gabel in einer für den Sensor vorgesehene und von außen in radialer Richtung eingebrachte Vertiefung angeordnet ist. Die Positionierung der Sensoranordnung erfolgt auf der Außenseite einer Gabelwelle in einem Bereich in axialer Richtung zwischen der Außenverzahnung und der Gabel. Stand der Technik ist FR 3104256.

Der Erfindung liegt die Aufgabe zugrunde, eine Einrichtung zur Erfassung und Übertragung von Messdaten von einer Welle derart auszubilden und anzuordnen, dass sie einfach zu fertigen und der Sensor gleichzeitig besser gegen äußere Einflüsse geschützt ist.

Gelöst wird die Aufgabe erfindungsgemäß durch den Gegenstand des Patentanspruchs 1.

Nachteilig ist dabei, dass die Gabelwelle, in die bei einer Kardanwelle das Drehmoment antriebsseitig eingeleitet wird, durch die Ausnehmung in ihrer Festigkeit geschwächt wird. Die geringere Festigkeit kann durch Einpressen eines Bauteils in die Ausnehmung kompensiert werden. Das Bauteil kann bei entsprechender Steifigkeit des Bauteils und bei entsprechend hohem, nach dem Einpressen erzeugten radialen Druck das zu übertragende Drehmoment und damit die reduzierte Festigkeit zumindest teilweise kompensieren. Die Ausnehmung ist im einfachsten Fall in Form einer Bohrung in die Gabelwelle eingebracht. In eine Bohrung lassen sich Bauteile einer Sensoranordnung sowie die Sensoranordnung selbst Einpressen.

Die Gabel kann dabei entweder mit einer Gabelwelle mit Außenverzahnung oder mit einer Hohlwelle mit Innenverzahnung kombiniert sein. Durch die von der Gabelseite aus stirnseitige Ausnehmung ist der Raum für die Sensoranordnung um die Mittelachse herum durch die Welle und zudem auch in beiden axialen Richtungen vor mechanischen Einflüssen geschützt und wird nicht durch Betriebsstoffe oder Schmutz beeinträchtigt. Auf der Seite des Kreuzgelenks, auf der die Ausnehmung am Wellenende mündet, schützt der Kreuzzapfen und die beiden an dem Kreuzzapfen angreifenden Gabeln vor mechanischen Einflüssen von außen. Die Ausnehmung beeinflusst aufgrund ihrer erfindungsgemäßen Anordnung weder die Größe noch die Bauart der Welle, weil die Geometrie der Gabelwelle auf der Seite der Gabel immer die gleiche ist. Variabel sind die Geometrien bezüglich der weiteren Bauteile einer Kardanwelle, wie beispielsweise die Länge der Zahnwelle oder des Hohlrohrs. Erfindungsgemäß kann durch die Positionierung der Ausnehmung auf der Gabelseite auch bei sehr kurzen Wellen und bei Anwendungen ohne eine Hohlwelle eine Sensoranordnung positioniert werden. Vom Gegenstand der Erfindung ist zunächst noch keine Sensoranordnung erfasst. Alle beschriebenen Richtungen, wie beispielsweise axial, koaxial, radial, umlaufend oder angestellt beziehen sich jeweils relativ zu der Mittelachse.

Für das Einpressen von Bauteilen zur Kompensation der Festigkeit hat die Ausnehmung eine vorteilhafte Geometrie. Insbesondere eine um die Mittelachse umlaufende Innenfläche mit einem Durchmesser zum Lagern eines Sensors und ein an die Innenfläche in axialer Richtung angrenzendes Profil, das zumindest teilweise gegenüber dem Durchmesser in radialer Richtung abweicht. Das Profil wirkt bevorzugt in axialer Richtung formschlüssig, sodass beispielsweise durch Kegelflächen mit sehr geringer Steigung relativ viel Druck in radialer Richtung erzeugt und damit auch durch erhöhte Reibung und Kraftschluss größere Drehmomente von der Welle auf die Bauteile einer Sensoranordnung übertragen werden können.

Das Profil bildet besonders bevorzugt einen umlaufenden und im Durchmesser gegenüber der Innenfläche reduzierten Abschnitt, der eine um einen Winkel angestellte Konusfläche aufweist, wobei der Winkel ein Maß von mindestens 0,5 Grad [°] und maximal 3,0 Grad [°] beträgt. Das Profil dient zur axialen Fixierung eines Bauteils der Sensoranordnung, in dem es durch den geringen Winkel entsprechenden großen radialen Druck erzeugt und eine Übertragung sowie Kompensation von Kräften erlaubt.

In einer bevorzugten alternativen Bauform ist das Profil als Innengewinde oder als Innenverzahnung ausgebildet, die zum Einschrauben oder Einschieben eines Bauteils zur axialen Fixierung einer Sensoranordnung dienen. Durch das Innengewinde lässt sich ein Bauteil Einschrauben, dass mit entsprechenden Konusflächen einen extrem hohen radialen Druck erzeugen kann. Ähnlich verhält es sich mit einer auf der Innenfläche vorgesehenen Innenverzahnung der Welle, die in Verbindung mit einem eingepressten Bauteil mit einer Außenverzahnung ebenfalls eine Kompensation von Kräften der zu übertragenen Drehmomente ermöglicht.

Für die Lösung kommen im Wesentlichen zwei Bauformen von Wellen mit einer Gabel in Betracht. Bei der häufigsten Bauform bildet die Welle mit der Gabel ein einteiliges Schmiedeteil, bei dem die Gabel in axialer Richtung an die Welle anschließt, wobei die Ausnehmung koaxial zu der Mittelachse durch die Gabel hindurch geführt und stirnseitig in den ersten Endabschnitt der Welle eingebracht ist. Grundsätzlich ist die Ausnehmung von außen von der Seite der Gabel und in Richtung zu der Mittelachse in das Wellenende eingebracht. Zur Lösung der Aufgabe ist es aber nicht zwingend erforderlich, dass die Ausnehmung koaxial zu der Mittelachse angeordnet ist. In technisch vorteilhaften und erfindungsgemässen Ausführungsformen ist die Ausnehmung jedoch zusätzlich koaxial zu der Mittelachse angeordnet. Die zu der Mittelachse koaxiale Anordnung der Ausnehmung ermöglicht eine entsprechend koaxiale Positionierung der Sensoranordnung. Diese koaxiale Anordnung hat den Vorteil, dass durch die Masse der Sensoranordnung äußerst geringe Unwuchten entstehen. Aufgrund der Durchdringung der Gabel kann der Sensor von dem Wellenende in die Welle eingebracht werden. Dafür ist es notwendig, auch in der Gabel eine Ausnehmung vorzusehen. Der Teil der Ausnehmung in der Gabel bietet erfindungsgemäß Stauraum für Teile der Sensoranordnung.

Bei einer alternativen gattungsgemäßen, jedoch zweiteiligen Bauform von Kardanwellen wird die Gabel auf die Welle aufgesetzt, sodass die Welle in die Gabel eintaucht. Dabei ist die Welle über eine Verzahnung in Umfangsrichtung mit der Gabel gekoppelt. Zur Positionierung der Sensoranordnung ist es vorteilhaft, dass die Ausnehmung direkt stirnseitig und koaxial zu der Mittelachse in den ersten Endabschnitt der Welle eingebracht ist. Eine Bearbeitung der Gabel ist in diesem Fall nicht notwendig. Auch bei dieser Ausführungsform ist zusätzlich zu der Richtung von der Gabelseite her die koaxiale Ausrichtung gefordert. Axiale und koaxiale Richtungen und Anordnungen sind im Rahmen der Erfindung grundsätzlich in Bezug zu der Mittelachse der Welle zu verstehen. Die axiale Richtung von der Gabel zur Welle hin, wird als die Richtung von außen bezeichnet. Der gegenüber den bekannten Lösungen zur Verfügung stehende und wesentlich kleinere Bauraum in der gabelseitigen Ausnehmung kann bei der einteiligen Bauform erfindungsgemäß dadurch kompensiert werden, dass Teile der Sensoranordnung wie beispielsweise die Antenne und/oder eine Batterie als Energieversorgung zumindest teilweise unmittelbar stirnseitig vor der Welle in der Gabel positioniert werden. Die Ausnehmung in der Gabel kann zur offenen Seite beziehungsweise nach außen hin im Durchmesser wesentlich größer dimensioniert werden als in der Welle, weil in diesem vorderen Bereich der Gabel keine wesentliche Übertragung des Drehmoments von der Welle über die Gabel auf den Kreuzzapfen erfolgt. Das Drehmoment wird im Wesentlichen unmittelbar nach dem Übergang von der Welle zu der Gabel im hinteren Bereich der Gabel übertragen. Aufgrund des größeren Durchmessers ist es möglich, eine in der Fläche größere Antenne einzusetzen, sodass die Datenübertragung optimiert werden kann.

Aufgrund der bei einem Kardangelenk mit einem Kreuzzapfen herstellungsbedingten Geometrie, ist entlang der Mittelachse zwischen der Gabel bzw. der Stirnseite der Welle am ersten Endabschnitt und dem Kreuzzapfen ein Abstand von durchschnittlich mehr als einem Zentimeter gegeben. Durch diesen Abstand ist ein Freiraum vorhanden, der eine störungsfreie Übertragung der elektromagnetischen Signale ermöglicht, die durch die Antenne abgegeben werden. Dieser Freiraum ermöglicht es beispielsweise auch, ohne Demontage des Kardangelenks die Sensoranordnung zu warten. Über diesen Freiraum lässt sich ein Verschluss für die Ausnehmung beispielsweise in Form eines Deckels und Teile der Sensoranordnung montieren und demontieren. Die Erreichbarkeit einer Ladebuchse eines Akkus als Energieversorgung des Sensors und insbesondere das Aufsetzen eines Steckers ist durch diesen Freiraum gewährleistet. Erfindungsgemäß wird der Vorteil durch die Wahl der Position der Ausnehmung nutzbar gemacht, weil die Zugänglichkeit zu dem Kardangelenk und zu dem Freiraum bei eingebauter Gabelwelle in diesem Bereich ohnehin gewährleistet ist. Die Lager des Kreuzzapfens sind zwecks einer Wartung zum Abschmieren mit einer Fettpresse gut erreichbar.

Für das Messen und Erfassen von Daten ist es in einem weiteren Schritt der Erfindung vorteilhaft, wenn die Einrichtung eine Sensoranordnung zur Erfassung und Übertragung der Messdaten umfasst, wobei ein Sensor als Teil der Sensoranordnung in der Ausnehmung positioniert und an der Oberfläche der Ausnehmung befestigt ist. Die Ausnehmung ist grundsätzlich geeignet, eine Sensoranordnung zu positionieren. Die Kombination einer solchen Welle mit einer Sensoranordnung ermöglicht es, Messwerte zu erfassen und die Sensoranordnung zu schützen.

Hinsichtlich der Datenerfassung kann es vorteilhafterweise vorgesehen sein, dass die Sensoranordnung zudem eine Antenne und eine Energieversorgung als Bauteil aufweist, wobei zumindest die Antenne in einem Bereich der Ausnehmung angeordnet ist, der in axialer Richtung an dem vorderen Ende der Ausnehmung und innerhalb der Gabel liegt. Die Antenne ist zum Übertragen der Messdaten vorgesehen. Bei bevorzugten Ausführungsformen ist zusätzlich ein Ladekabel mit einer Ladebuchse für einen Akku als Energieversorgung vorgesehen. In der Ausnehmung lassen sich verschiedenste Bauteile in axialer Richtung hintereinander positionieren. Von großem Interesse sind die Messdaten der Welle unmittelbar am Ende vor dem Übergang zu der Gabel. Die Positionierung des Sensors an dieser Stelle erlaubt es, die Antenne noch weiter nach außen direkt an der Öffnung der Ausnehmung in dem Bereich der Gabel zu platzieren. Für die Energieversorgung ist die Position ganz hinten in der Ausnehmung hinter dem Sensor vorgesehen.

In Bezug auf die Datenübertragung kann für die vorliegende Erfindung vorteilhaft sein, wenn die Ausnehmung in dem Bereich innerhalb der Gabel einen größeren Durchmesser als in der Welle aufweist. Durch die Vergrößerung des Durchmessers lässt sich eine größere Antenne einsetzen, durch deren Größe die Datenübertragung präziser und leistungsstärker ist.

Im Zusammenhang mit der Herstellung einer einfachen Ausnehmung kann es von Vorteil sein, wenn die Ausnehmung als Loch, als Sacklochbohrung oder als Durchgangsbohrung ausgebildet ist, wobei die Ausnehmung eine Länge zwischen 20 mm und 280 mm oder zwischen 160 mm und 200 mm aufweist. Eine Bohrung als einfachste Ausführungsform lässt sich als Sacklochbohrung oder als Durchgangsbohrung einbringen. Durchgangsbohrungen können bei sehr kurzen Wellen Anwendung finden, sodass die Bohrung bis zu dem Ende der Welle geführt ist, das gegenüber der Gabel angeordnet ist. Neben Bohrungen wäre es auch möglich, die Ausnehmung durch Erodieren herzustellen.

Hinsichtlich bestmöglicher Messergebnisse kann es vorteilhaft sein, wenn die innere Oberfläche der Ausnehmung bezüglich des Durchmessers eine Maßtoleranz von im Mittel zwischen + 1/100 mm und + 6/100 mm aufweist. Die Maßtoleranz entspricht bevorzugt dem Wert H7 der gängigen Toleranztabellen. Auch ist es vorteilhaft, dass die innere Oberfläche der Ausnehmung bezüglich der Rundheit eine Maßtoleranz von maximal 0,03 mm bis 0,2 mm und/oder bezüglich der Koaxialität eine Maßtoleranz von maximal 0,05 mm bis 0,2 mm und/oder bezüglich der Rauheit einen Mittenrauwert Ra zwischen 0,4 µm und 32 µm aufweist.

In Bezug auf die Gestaltung der Welle gibt es erfindungsgemäß keine Grenzen, weshalb es vorteilhaft ist, dass die Welle als Gabelwelle oder als Hohlwelle oder als Welle ohne eine Verzahnung ausgebildet ist oder ein Bauteil einer Doppelgelenkwelle bildet. Die Ausnehmung von der Gabelseite lässt sich in nahezu jede beliebige Welle einbringen.

In Bezug auf den Einsatz der Welle zur Übertragung von Drehmomenten ist vorgesehen, dass in der Gabel ein Kreuzzapfen und an dem Kreuzzapfen ein Flansch mit einer Gabel gelagert ist. Die Welle selbst ist über eine Verschiebung mit einer weiteren Welle kombiniert, über die das Drehmoment über ein weiteres Kardangelenk oder eine sonstige Verbindung übertragen wird.

Weitere Vorteile und Einzelheiten der Erfindung sind in den Patentansprüchen und in der Beschreibung erläutert und in den Figuren dargestellt. Es zeigen
- Figur 1: eine Schnittansicht einer Gabelwelle mit einer Ausnehmung;
- Figur 2: eine Ansicht gemäß Figur 1 mit einer Sensoranordnung;
- Figur 3: eine perspektivische Ansicht einer Gabelwelle mit Blick auf das Wellenende;
- Figur 4: eine Ansicht einer kompletten Kardanwelle mit einer Gabelwelle und einer Hohlwelle;
- Figur 4a: einen vergrößerten Ausschnitt gemäß Figur 4 und
- Figur 5: eine Prinzipskizze einer Gabelwelle mit einer um die Mittelachse umlaufende Innenfläche mit unterschiedlichen Profilen.

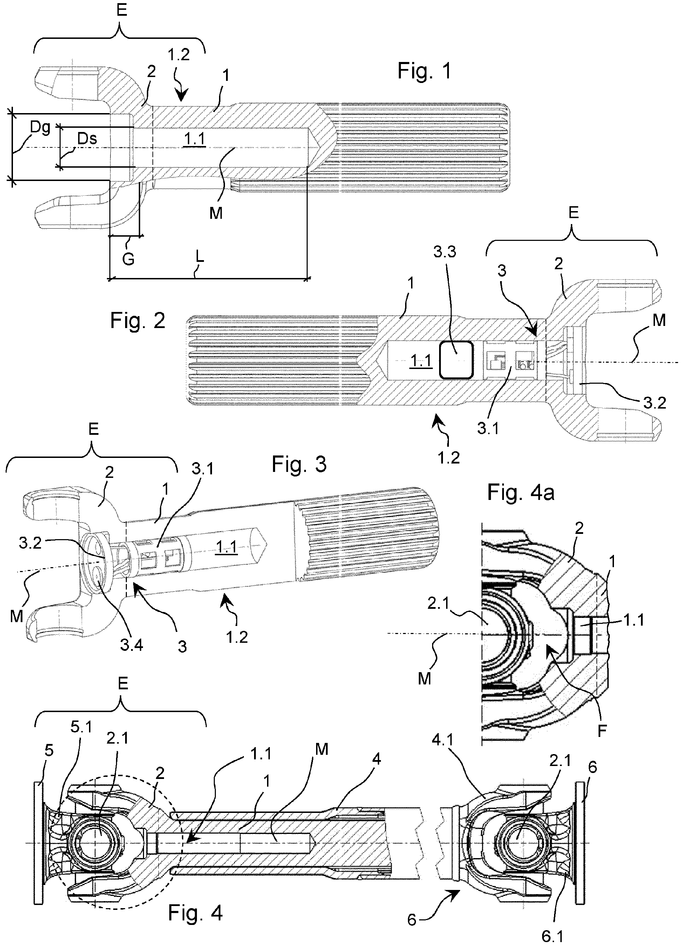

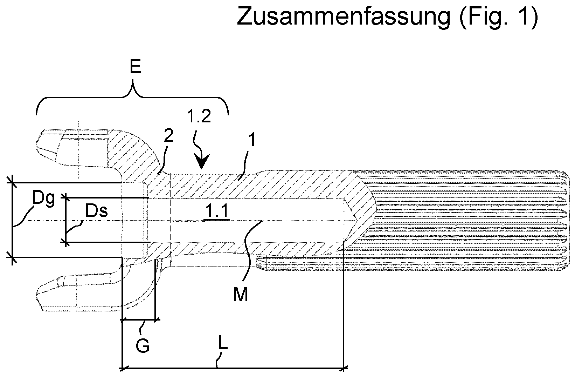

Die Figuren 1-3 zeigen beispielhaft eine Gabelwelle, bei der von dem Wellenende E aus eine Ausnehmung 1.1 zum Einbringen einer Sensoranordnung 3 vorgesehen ist. Die Gabelwelle als Schmiedeteil besteht aus einer Welle 1 und einer Gabel 2. **In** dem im Schnitt dargestellten Bereich der Gabelwelle schließt die Gabel 2 an einen ersten Endabschnitt 1.2 der Welle 1 an die Welle 1 an. Das Ende der Welle 1 wird in den Figuren durch die rechtwinklig zur Mittelachse M der Welle 1 verlaufende gestrichelte Linie verdeutlicht. Der erste Endabschnitt 1.2 definiert zusammen mit der Gabel 2 das für die Positionierung der Sensoranordnung 3 maßgebliche Wellenende E der Gabelwelle. Das in Bezug zu der Gabel 2 gegenüberliegende Ende der Welle 1 bildet einen zweiten Endabschnitt der Welle 1. **In** diesem zweiten Endabschnitt der Welle 1 ist die Verzahnung perspektivisch dargestellt, die als Verbindung zu einer gattungsgemäßen Hohlwelle dient, welche in Figur 4 dargestellt ist. Die Gabelwelle und die Hohlwelle sind über die Verzahnungen zueinander verschiebbar gelagert.

Die Gabelwelle nach den Figuren 1-4 ist ein einteiliges Schmiedeteil, bestehend aus der Welle 1 und der Gabel 2. Gabelwellen können auch als zweiteilige Bauteile gebildet sein (nicht dargestellt), bei denen die Gabel auf den ersten Endabschnitt der Welle aufgesetzt ist und die Gabel über eine Innenverzahnung mit der Welle verbunden ist.

Nach den hier dargestellten Ausführungsbeispielen ist die Ausnehmung 1.1 in Form einer Bohrung koaxial zu der Mittelachse M der Welle 1 positioniert und wurde von außen von dem Wellenende E aus durch die Gabel 2 und in den ersten Endabschnitt 1.2 der Welle 1 eingebracht. Die Ausnehmung 1.1 weist eine Länge L von 180 mm auf. An dieses Ende der Welle 1 schließt die Gabel 2 als Teil des Schmiedeteils körperlich an.

Die weitere Lösung der Aufgabe umfasst die Positionierung eines Sensors unmittelbar am Ende des ersten Endabschnitts 1.2 der Welle 1. **In** den Figuren 2 und 3 ist eine Sensoranordnung 3 dargestellt, die in die Ausnehmung 1.1 eingebracht ist. Die Sensoranordnung 3 umfasst einen Sensor 3.1, eine Antenne 3.2 und eine Energieversorgung 3.3 in Form eines wiederaufladbaren Akkus. Zum Aufladen des Akkus 3.3 ist eine Ladebuchse 3.4 mit einem Ladekabel vorgesehen, der nach außen hin am Anfang der Ausnehmung 1.1 positioniert ist. Der Sensor ist unmittelbar am Ende des ersten Endabschnitts 1.2 positioniert, an dem die Welle 1 in die Gabel 2 übergeht. Für die hier dargestellte Sensoranordnung 3 weist die Ausnehmung 1.1 in der Gabel gemäß Figur 1 in einem Bereich (G) am Anfang der Ausnehmung 1.1 einen Durchmesser Dg auf, der größer ist als der Durchmesser Dw der Ausnehmung 1.1 in der Welle. Dieser größere Durchmesser erlaubt wie in den Figuren 2 und 3 gezeigt die Positionierung einer im Durchmesser größeren Antenne 3.2.

In Figur 4 ist eine komplette Kardanwelle dargestellt, bei der an die Gabel 2 ein Kreuzzapfen 2.1 anschließt, der wiederum über eine weitere Gabel 5.1 mit einem Flansch 5 gekoppelt ist. Auf dem dem Wellenende E gegenüberliegenden Ende der Welle 1 ist eine Hohlwelle 4 mit einer Innenverzahnung auf die Welle 1 aufgeschoben. Am Ende der Hohlwelle 4 ist eine Gabel 4.1 vorgesehen, die über einen weiteren Kreuzzapfen 2.1 mit einer weiteren Gabel 6.1 und einem daran anschließenden weiteren Flansch 6 gekoppelt ist.

Der im linken Bereich der Figur 4 mit einem gestrichelten Kreis hervorgehobene Bereich ist in Figur 4a vergrößert dargestellt. Bei solchen üblichen Anordnungen von Kardanwellen ist in axialer Richtung im Bereich der Mittelachse M zwischen der Gabel 2 und dem Kreuzzapfen 2.1 ein Abstand von mehreren Millimetern oder meist mehr als einem Zentimeter vorgesehen. In diesem als Freiraum F bezeichneten Bereich sind gewöhnlich auch Schmiernippel zur Wartung der Lager der Kreuzzapfen 2.1 angeordnet. Aufgrund des durch den Abstand gegebenen Freiraums F ist die Ausnehmung 1.1 stirnseitig am Wellenende E sehr gut zugänglich. Damit ist ein Zugang zu der Sensoranordnung 3 gewährleistet, um beispielsweise das in der Ausnehmung 1.1 positionierte Ladekabel über die Ladebuchse 3.4 für den Akku 3.3 mit einem Ladegerät zu verbinden. Hierzu ist unmittelbar zu Beginn der Ausnehmung 1.1 im Bereich der Antenne 3.2 die Ladebuchse 3.4 vorgesehen. Ferner erlaubt dieser Freiraum F eine störungsfreie Übertragung der elektromagnetischen Signale der Antenne 3.2.

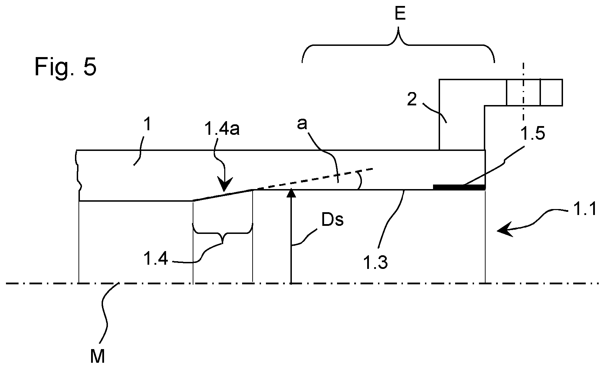

Figur 5 zeigt eine Prinzipskizze einer Welle 1 mit der Ausnehmung 1.1. Die Ausnehmung 1.1 weist eine um die Mittelachse M umlaufende Innenfläche 1.3 mit einem Durchmesser Ds zum Lagern einer Sensoranordnung mit Sensor (nicht dargestellt) auf. An die Innenfläche 1.3 sind in axialer Richtung angrenzend links und rechts unterschiedliche Profile vorgesehen, die jeweils zumindest teilweise gegenüber dem Durchmesser Ds in radialer Richtung abweichen. Durch die Abweichung ist in axialer Richtung ein Formschluss mit einem Bauteil möglich, dass in die Ausnehmung 1.1 eingebracht wird. Das weiter innen (links) in der Ausnehmung 1.1 vorgesehene Profil bildet einen umlaufenden und im Durchmesser gegenüber der Innenfläche 1.3 reduzierten Abschnitt 1.4, der eine um einen Winkel a angestellte Konusfläche 1.4a aufweist, wobei der Winkel a ein Maß bevorzugt zwischen 1,1 und 1,5 Grad [°] aufweist. Bevorzugt sind Winkel in Größenordnungen vorgesehen, die üblicherweise bei Morsekegeln eingesetzt werden. Das in der Ausnehmung 1.1 weiter außen (rechts) angeordnete Profil ist als Innengewinde 1.5 ausgebildet ist und dient zum Einschrauben eines nicht näher dargestellten Bauteils zur axialen Fixierung einer Sensoranordnung 3. Das Bauteil weist einen zu der Konusfläche 1.4a korrespondierende parallele Konusfläche auf.

### Bezugszeichenliste

- 1: Welle
- 1.1: Ausnehmung
- 1.2: Endabschnitt
- 1.3: Innenfläche (1.3)
- 1.4: Abschnitt (1.4)
- 1.4a: Konusfläche
- 1.5: Innengewinde (1.5)
- 2: Gabel
- 2.1: Kreuzzapfen
- 3: Sensoranordnung
- 3.1: Sensor
- 3.2: Antenne
- 3.3: Energieversorgung
- 3.4: Ladebuchse
- 4: Hohlwelle
- 4.1: Gabel
- 5: Flansch
- 5.1: Gabel
- 6: Flansch
- 6.1: Gabel
- Ds: Durchmesser
- E: Wellenende
- F: Freiraum
- G: Bereich
- L: Länge
- M: Mittelachse

## Patentansprüche

1. Welle (1) mit einer Einrichtung zur mittelbaren Erfassung und Übertragung von Messdaten von der Welle (1), die aus einer mechanischen Beanspruchung der Welle (1) resultieren, wobei die Welle (1) mit einer Mittelachse (M) als Teil einer Kardanwelle einen ersten Endabschnitt (1.2) aufweist und die Welle (1) mit einer Gabel (2) zum Übertragen von Drehmomenten auf einen Kreuzzapfen (2.1) kombiniert ist und die Welle (1) mit der Gabel (2) ein Wellenende (E) bildet, wobei in der Welle (1) oder im Endabschnitt (1.2) eine Ausnehmung (1.1) zur Aufnahme zumindest eines Teils einer Sensoranordnung (3) vorgesehen ist, **dadurchgekennzeichnet,** dass die Ausnehmung (1.1) von außen von der Seite der Gabel (2) und in Achsrichtung der Mittelachse (M) in das Wellenende (E) eingebracht ist.

2. Welle nach Anspruch 1,
**dadurch gekennzeichnet,**
**dass** die Ausnehmung (1.1)
a) eine um die Mittelachse (M) umlaufende Innenfläche (1.3) mit einem Durchmesser (Ds) zum Lagern eines Sensors (3.1) aufweist und
b) ein an die Innenfläche (1.3) in axialer Richtung angrenzendes Profil (1.4, 1.5) aufweist, das zumindest teilweise gegenüber dem Durchmesser (Ds) in radialer Richtung abweicht.

3. Welle nach Anspruch 1 oder 2,
**dadurch gekennzeichnet,**
**dass** das Profil einen umlaufenden und im Durchmesser gegenüber der Innenfläche (1.3) reduzierten Abschnitt (1.4) bildet, der eine um einen Winkel a angestellte Konusfläche (1.4a) aufweist, wobei der Winkel a ein Maß von mindestens 0,5 Grad [°] und maximal 3,0 Grad [°] beträgt.

4. Vorrichtung nach einem der vorhergehenden Ansprüche,
**dadurch gekennzeichnet,**
**dass** das Profil als Innengewinde (1.5) oder als Innenverzahnung ausgebildet ist und zum Einschrauben oder Einschieben eines Bauteils zur axialen Fixierung einer Sensoranordnung (3) dient.

5. Welle nach einem der vorhergehenden Ansprüche,
**dadurch gekennzeichnet,**
**dass** die Gabel (2) in axialer Richtung an die Welle (1) anschließt und mit der Welle (1) ein einteiliges Schmiedeteil bildet, wobei die Ausnehmung (1.1) koaxial zu der Mittelachse (M) durch die Gabel (2) hindurch geführt und stirnseitig in den ersten Endabschnitt (1.2) der Welle (1) eingebracht ist.

6. Welle nach einem der vorhergehenden Ansprüche,
**dadurch gekennzeichnet,**
**dass** die Gabel (2) auf die Welle (1) aufgesetzt und die Ausnehmung (1.1) direkt stirnseitig und koaxial zu der Mittelachse (M) in den ersten Endabschnitt (1.2) der Welle (1) eingebracht ist.

7. Welle nach einem der vorhergehenden Ansprüche,
**dadurch gekennzeichnet,**
**dass** die Einrichtung eine Sensoranordnung (3) zur Erfassung und Übertragung der Messdaten umfasst, wobei ein Sensor (3.1) als Teil der Sensoranordnung (3) in der Ausnehmung (1.1) befestigt ist.

8. Welle nach Anspruch 4,
**dadurch gekennzeichnet,**
**dass** die Sensoranordnung (3) zudem eine Antenne (3.2) und eine Energieversorgung (3.3) als Bauteil aufweist, wobei zumindest die Antenne (3.2) in einem Bereich (G) der Ausnehmung (1.1) angeordnet ist, der in axialer Richtung an dem vorderen Ende der Ausnehmung (1.1) und innerhalb der Gabel (2) liegt.

9. Welle nach Anspruch 5,
**dadurch gekennzeichnet,**
**dass** die Ausnehmung (1.1) in dem Bereich (G) innerhalb der Gabel (2) zumindest teilweise einen Durchmesser (Dg) aufweist, der gegenüber dem Durchmesser (Ds) vergrößert ist.

10. Welle nach einem der vorhergehenden Ansprüche,
**dadurch gekennzeichnet,**
**dass** die Ausnehmung (1.1) als Loch, als Sacklochbohrung oder als Durchgangsbohrung ausgebildet ist, wobei die Ausnehmung (1.1) eine Länge (L) zwischen 20 mm und 280 mm oder zwischen 160 mm und 200 mm aufweist.

11. Welle nach einem der vorhergehenden Ansprüche,
**dadurch gekennzeichnet,**
**dass** die innere Oberfläche der Ausnehmung (1.1) bezüglich
a) des Durchmessers (Dw) eine Maßtoleranz von im Mittel zwischen + 1/100 mm und + 6/100 mm aufweist und/oder
b) der Rundheit eine Maßtoleranz von maximal 0,03 mm bis 0,2 mm und/oder
c) der Koaxialität eine Maßtoleranz von maximal 0,05 mm bis 0,2 mm und/oder
d) der Rauheit einen Mittenrauwert Ra zwischen 0,4 µm und 32 µm aufweist.

12. Welle nach einem der vorhergehenden Ansprüche,
**dadurch gekennzeichnet,**
**dass** die Welle (1) als Gabelwelle oder als Hohlwelle oder als Welle (1) ohne eine Verzahnung ausgebildet ist oder die Welle (1) ein Bauteil einer Doppelgelenkwelle bildet.

13. Welle nach einem der vorhergehenden Ansprüche,
**dadurch gekennzeichnet,**
**dass** in der Gabel (2) ein Kreuzzapfen (2.1) und an dem Kreuzzapfen (2.1) ein Flansch (5) mit einer Gabel (5.1) gelagert ist.

14. System bestehend aus einer Welle (1) nach einem der vorhergehenden Ansprüche und einem oder mehreren Bauteilen zum Anschließen an die Welle (1) in Form von Kreuzzapfen, Gabelwellen, Hohlwellen, Getriebewellen, Kardangelenken, Flanschen und Getrieben zum Übertragen von Drehmomenten.

15. Verwendung einer Ausnehmung (1.1) in einer Welle (1) nach einem der vorhergehenden Ansprüche zur Aufnahme zumindest eines Teils einer Sensoranordnung (3), wobei die Welle (1) mit einer Mittelachse (M) als Teil einer Kardanwelle einen ersten Endabschnitt (1.2) aufweist und die Welle (1) mit einer Gabel (2) zum Übertragen von Drehmomenten auf einen Kreuzzapfen (2.1) derart kombiniert ist, dass die Welle (1) mit der Gabel (2) ein Wellenende (E) bilden und die Ausnehmung (1.1) von außen und koaxial zu der Mittelachse (M) stirnseitig in das Wellenende (E) in den ersten Endabschnitt (1.2) der Welle (1) eingebracht ist.

## Claims

1. A shaft (1) with a device for indirectly acquiring and transmitting measurement data from the shaft (1), which measurement data results from a mechanical stress on the shaft (1), wherein the shaft (1) with a central axis (M) has a first end section (1.2) as part of a cardan shaft, the shaft (1) is combined with a fork (2) for transmitting torques to a cross pin (2.1) and the shaft (1) forms a shaft end (E) with the fork (2),
wherein a recess (1.1) for receiving at least part of a sensor arrangement (3) is provided in the shaft (1) or in the end section (1.2), **characterized in that** the recess (1.1) is produced in the shaft end (E) from outside from the side of the fork (2) and in the axial direction of the central axis (M).

2. The shaft according to claim 1,
**characterized in**
**that** the recess (1.1) has
a) an inner surface (1.3) with a diameter (Ds) for mounting a sensor (3.1), which inner surface extends circumferentially about the central axis (M), and
b) a profile (1.4, 1.5) that borders on the inner surface (1.3) in the axial direction and at least partially deviates from the diameter (Ds) in the radial direction.

3. The shaft according to claim 1 or 2,
**characterized in**
**that** the profile forms a circumferentially extending section (1.4), the diameter of which is reduced in comparison with the inner surface (1.3), wherein said section has a conical surface (1.4a) that is inclined by an angle a, and wherein the angle a has a value of at least 0.5 degrees [°] and no more than 3.0 degrees [°].

4. The device according to one of the preceding claims,
**characterized in**
**that** the profile is realized in the form of an internal thread (1.5) or in the form of an internal toothing and serves for screwing in or sliding in a component for axially fixing a sensor arrangement (3).

5. The shaft according to one of the preceding claims,
**characterized in**
**that** the fork (2) is connected to the shaft (1) in the axial direction and forms a one-piece forging together with the shaft (1), wherein the recess (1.1) extends through the fork (2) coaxially to the central axis (M) and is produced in the first end section (1.2) of the shaft (1) on the face side.

6. The shaft according to one of the preceding claims,
**characterized in**
**that** the fork (2) is attached to the shaft (1) and the recess (1.1) is directly produced in the first end section (1.2) of the shaft (1) on the face side and coaxially to the central axis (M).

7. The shaft according to one of the preceding claims,
**characterized in**
**that** the device comprises a sensor arrangement (3) for acquiring and transmitting the measurement data, wherein a sensor (3.1) that forms part of the sensor arrangement (3) is fastened in the recess (1.1).

8. The shaft according to claim 4,
**characterized in**
**that** the sensor arrangement (3) additionally has a components in the form of an antenna (3.2) and an energy supply (3.3), wherein at least the antenna (3.2) is arranged in a region (G) of the recess (1.1), which region lies on the front end of the recess (1.1) in the axial direction and within the fork (2).

9. The shaft according to claim 5,
**characterized in**
**that** the recess (1.1) has at least partially a diameter (Dg), which is enlarged in comparison with the diameter (Ds) in the region (G) within the fork (2).

10. The shaft according to one of the preceding claims,
**characterized in**
**that** the recess (1.1) is realized in the form of a hole, a blind hole or a through-hole, wherein the recess (1.1) has a length (L) between 20 mm and 280 mm or between 160 mm and 200 mm.

11. The shaft according to one of the preceding claims,
**characterized in**
**that** the inner surface of the recess (1.1) has
a) an average dimensional tolerance between + 1/100 and + 6/100 with respect to the diameter (Dw) and/or
b) a dimensional tolerance of no more than 0.03 mm to 0.2 mm with respect to the circularity and/or
c) a dimensional tolerance of no more than 0.05 mm to 0.2 mm with respect to the coaxiality and/or
d) an average roughness value Ra between 0.4 µm and 32 µm with respect to the roughness.

12. The shaft according to one of the preceding claims,
**characterized in**
**that** the shaft (1) is realized in the form of a fork shaft or a hollow shaft or a shaft (1) without toothing or in that the shaft (1) forms a component of a double-jointed cardan shaft.

13. The shaft according to one of the preceding claims,
**characterized in**
**that** a cross pin (2.1) is mounted in the fork (2) and a flange (5) with a fork (5.1) is mounted on the cross pin (2.1).

14. A system consisting of a shaft (1) according to one of the preceding claims and one or more components for being connected to the shaft (1) in the form of cross pins, fork shafts, hollow shafts, gear shafts, universal joints, flanges and gear units for transmitting torques.

15. A utilization of a recess (1.1) in a shaft (1) according to one of the preceding claims for receiving at least part of a sensor arrangement (3), wherein the shaft (1) with a central axis (M) has a first end section (1.2) as part of a cardan shaft and the shaft (1) is combined with a fork (2) for transmitting torques to a cross pin (2.1) in such a way that the shaft (1) forms a shaft end (E) with the fork (2), wherein the recess (1.1) is produced in the first end section (1.2) of the shaft (1) from outside and coaxially to the central axis (M) on the face side of the shaft end (E).

## Revendications

1. Arbre (1) avec un agencement pour la saisie et la transmission indirectes de données de mesure de l'arbre (1), qui résultent d'une sollicitation mécanique de l'arbre (1), sachant que l'arbre (1) comporte une première section d'extrémité (1.2) avec un axe central (M) en tant que partie d'un arbre à cardan et l'arbre (1) est combiné à une fourche (2) pour la transmission de couples à un croisillon (2.1) et l'arbre (1) forme avec la fourche (2) une extrémité d'arbre (E),
sachant que dans l'arbre (1) ou dans la section d'extrémité (1.2) un évidement (1.1) est prévu pour recevoir au moins une partie d'un système de détection *(3), **caractérisé en ce que*** l'évidement (1.1) est aménagé dans l'extrémité d'arbre (E) de l'extérieur du côté de la fourche (2) et en direction axiale de l'axe central (M).

2. Arbre selon la revendication 1,
***caractérisé en ce que***
l'évidement (1.1) comporte
a) une surface intérieure (1.3) passant autour de l'axe central (M) avec un diamètre (Ds) pour loger un capteur (3.1) et
b) un profil (1.4, 1.5) adjacent à la surface intérieure (1.3) dans la direction axiale, qui s'écarte au moins en partie en direction radiale par rapport au diamètre (Ds).

3. Arbre selon la revendication 1 ou 2,
**caractérisé en ce que**
le profilé forme une section (1.4) périphérique et réduite en diamètre par rapport à la surface intérieure (1.3), qui comporte une surface conique (1.4a) inclinée d'un angle **a,** sachant que l'angle **a** représente une mesure d'au moins 0,5 degré [°] et au maximum de 3,0 degrés [°].

4. Dispositif selon l'une quelconque des revendications précédentes,
***caractérisé en ce que***
le profilé est constitué sous la forme d'un filetage intérieur (1.5) ou d'une denture intérieure et sert à visser ou introduire un composant pour la fixation axiale d'un système de détection (3).

5. Arbre selon l'une quelconque des revendications précédentes,
***caractérisé en ce que***
la fourche (2) se raccorde en direction axiale à l'arbre (1) et forme avec l'arbre (1) une pièce forgée monobloc, sachant que l'évidement (1.1) (1.1) est passé coaxialement à l'axe central (M) à travers la fourche (2) et est aménagé en face avant dans la première section d'extrémité (1.2) de l'arbre (1).

6. Arbre selon l'une quelconque des revendications précédentes,
***caractérisé en ce que***
la fourche (2) est posée sur l'arbre (1) et l'évidement (1.1) est aménagé directement en face avant et coaxialement à l'axe central (M) dans la première section d'extrémité (1.2) de l'arbre (1).

7. Arbre selon l'une quelconque des revendications précédentes,
***caractérisé en ce que***
l'agencement comprend un système de détection (3) pour la saisie et la transmission des données de mesure, sachant qu'un capteur (3.1) est fixé dans l'évidement (1.1) en tant que partie du système de détection (3).

8. Arbre selon la revendication 4,
***caractérisé en ce que***
le système de détection (3) comporte en outre une antenne (3.2) et une alimentation en énergie (3.3) en tant que composants, sachant qu'au moins l'antenne (3.2) est disposée dans une zone (G) de l'évidement (1.1), qui se situe en direction axiale à l'extrémité avant de l'évidement (1.1) et à l'intérieur de la fourche (2).

9. Arbre selon la revendication 5,
***caractérisé en ce que***
l'évidement (1.1) comporte dans la zone (G) à l'intérieur de la fourche (2) au moins en partie un diamètre (Dg), qui est agrandi par rapport au diamètre (Ds).

10. Arbre selon l'une quelconque des revendications précédentes,
***caractérisé en ce que***
l'évidement (1.1) est constitué sous la forme d'un trou, d'un alésage de trou borgne ou sous la forme d'un alésage de passage, sachant que l'évidement (1.1) comporte une longueur (L) se situant entre 20 mm et 280 mm ou entre 160 mm et 200 mm.

11. Arbre selon l'une quelconque des revendications précédentes,
***caractérisé en ce que***
la surface intérieure de l'évidement (1.1) concernant
a) le diamètre (Dw) comporte une tolérance de mesure se situant en moyenne entre + 1/100 mm et + 6/100 mm et/ou
b) la rotondité comporte une tolérance de mesure maximum de 0,03 mm à 0,2 mm et/ou
c) la coaxialité comporte une tolérance de mesure maximum de 0,05 mm à 0,2 mm et/ou
d) la rugosité comporte un indice de rugosité moyen Ra se situant entre 0,4 µm et 32 µm.

12. Arbre selon l'une quelconque des revendications précédentes,
***caractérisé en ce que***
l'arbre (1) est constitué sous la forme d'un arbre à fourche ou d'un arbre creux ou d'un arbre (1) sans une denture ou l'arbre (1) forme un composant d'un arbre à double joint de cardan.

13. Arbre selon l'une quelconque des revendications précédentes,
***caractérisé en ce que***
dans la fourche (2) est logé un croisillon (2.1) et une bride (5) avec une fourche (5.1) sur le croisillon (2.1).

14. Système composé d'un arbre (1) selon l'une quelconque des revendications précédentes et d'un ou plusieurs composants pour raccordement à l'arbre (1) sous la forme de croisillons, d'arbres à fourche, d'arbres creux, d'arbres de transmission, de joints de cardan, de brides et de transmissions pour transmettre des couples.

15. Utilisation d'un évidement (1.1) dans un arbre (1) selon l'une quelconque des revendications précédentes pour loger au moins une partie d'un système de détection (3), sachant que l'arbre (1) avec un axe central (M) en tant que partie d'un arbre à cardan comporte une première section finale (1.2) et l'arbre (1) est combiné avec une fourche (2) pour transmettre des couples à un croisillon (2.1) de telle manière que l'arbre (1) forme avec la fourche (2) une extrémité d'arbre (E) et l'évidement (1.1) est aménagé de l'extérieur et coaxialement à l'axe central (M) dans la première section d'extrémité (1.2) de l'arbre (1) en face avant dans l'extrémité d'arbre (E).
